# EUROPÄISCHE PATENTSCHRIFT

(11) **EP 1 315 942 B1**
(45) Veröffentlichungstag und Bekanntmachung des Hinweises auf die Patenterteilung: **02.03.2005**
(21) Anmeldenummer: 01965167.8
(22) Anmeldetag: 03.08.2001
(51) Int. Cl.: G01B 5/06

(54) **KONTINUIERLICHE ERFASSUNG DER DICKE MIT MESSROLLE MIT PARALLELANGELENKTEM, WANNENARTIGEM GLEITSCHUH ( LANGHOLZ )**
CONTINUOUS RECORDING OF THICKNESS, USING A MEASURING ROLLER WITH A TUB-SHAPED GUIDE SHOE, ARTICULATED IN PARALLEL (LONG TIMBER)
DISPOSITIF DE MESURE PERMETTANT DE MESURER EN CONTINU L'EPAISSEUR DE PIECES PLATES ALLONGEES

(30) Priorität: 07.09.2000 DE 20015505 U
(43) Veröffentlichungstag der Anmeldung: 04.06.2003
(73) Patentinhaber: Noltronic Grecon Greten GmbH & Co. KG, 58507 Lüdenscheid (DE)
(72) Erfinder: FUNKE, Hans, Adolf, Hugo, 58509 Lüdenscheid (DE)
(74) Vertreter: Sobisch, Peter, Dipl.-Ing.
(86) Internationale Anmeldenummer: PCT/EP2001/008992
(87) Internationale Veröffentlichungsnummer: WO 2002/021073

(56) Entgegenhaltungen:
- DE-A- 2 928 085
- DE-A- 3 512 698
- JP-A- 10 332 361
- JP-A- 60 020 108

## Beschreibung

Die Erfindung bezieht sich auf eine Messeinrichtung entsprechend dem Oberbegriff des Anspruchs 1.

Es ist bekannt, zur Kontrolle des Dickenverlaufs langgestreckter Messobjekte, z.B. von Langhölzern bzw. plattenförmigem Messgut ein Messsystem vorzusehen, welches durch wenigstens eine, oberhalb des Messobjektes gehaltene und in Richtung auf dieses hin verfahrbare Messrolle gekennzeichnet ist. Die Nullstellung der mit einem pneumatischen Antrieb in Wirkverbindung stehenden Messrolle wird durch eine Bezugsebene gebildet, auf der das Messobjekt aufliegt und entlang welcher es mit einer definierten Geschwindigkeit bewegbar ist. Die Messrolle ihrerseits steht ferner mit einem Messumformer in Wirkverbindung, mittels welchem deren Verschiebeweg durch ein entsprechendes elektrisches Signal darstellbar ist.

Der Messvorgang ist bei diesem bekannten Messsystem derart durchgeführt worden, dass die Messrolle aus ihrer zurückgezogenen Position oberhalb des Messobjektes in Richtung auf dieses hin ausgefahren und in Berührung mit diesem gebracht wurde, nachdem das sich bewegende Messobjekt eine Position unterhalb der Messrolle erreicht hatte. In Abhängigkeit von den Vorschubgeschwindigkeiten des Messobjektes einerseits und der Messrolle andererseits führt dies jedoch dazu, dass ein Anfangsbereich des Messobjektes in seiner Dicke nicht erfasst wird. Es wird ferner die Messrolle ausgehend von ihrer auf der Oberfläche des Messobjektes abrollenden Position zurückgezogen, bevor das Ende des Messobjektes erreicht ist. Diese anfangs- und endseitige Begrenzung der Messstrecke auf dem Messobjekt wurde unter anderem eingerichtet, um mechanische Beschädigungen des Messsystems zu vermeiden.

Zur Zeit werden zur Verbesserung des Schutzes der Messsysteme vor einer mechanischen Zerstörung Messeinrichtungen verwendet, bei denen eine Einlauframpe vorgesehen ist. Zu diesem Zweck ist eine an ihrem Ende um eine sich parallel zu einer Bezugsebene schwenkbar gelagerte Einlauframpe vorgesehen. Diese steht an ihrem, ihrer Anlenkung abgekehrten freien Ende mit einer Messrolle in Wirkverbindung, die mittels beiderseitiger Laufrollen auf der Innenseite dieser Rampe abgestützt ist und deren Bodenbereich geringfügig durchdringt. Infolge des gegen die Unterseite des Bodenbereichs der Einlauframpe anstoßenden Messobjektes wird diese verschwenkt, wobei im Verlauf des weiteren Vorschubs schließlich die Messrolle in Anlage auf der Oberfläche des Messobjektes gelangt. In Abhängigkeit von der Vorschubgeschwindigkeit, jedoch auch des vergleichsweise langen Hebelarmes zwischen dem Anlenkungspunkt der Einlauframpe einerseits und der Messrolle andererseits, ergeben sich außerordentlich hohe Beschleunigungsmomente für die Messrolle und vor allem der dieser funktionell nachgeordneten Elemente des Messsystems. Zur Vermeidung von Schwingungsproblemen, die sich infolge einer Beschleunigung der Einlauframpe ergeben, ist eine dem pneumatischen Antrieb der Messrolle zugeordnete Steuerung mit der Maßgabe eingerichtet, dass frühzeitig eine ein Überschwingen unterdrückende Gegenkraft entwickelt wird. Von Nachteil ist hier jedoch, dass die zu kompensierenden Beschleunigungsmomente abhängig sind sowohl von dem Vorschub des Messobjektes als auch von dessen Dicke.

Zweck dieser bekannten Messsysteme ist es, möglichst vollständige Informationen über den Dickenverlauf der Messobjekte - in dessen Längsrichtung gesehen - zu gewinnen, wobei die Messobjekte nach Maßgabe einer definierten Vorschubgeschwindigkeit und mit unterschiedlichen stirnseitigen Abständen voneinander durch das Messsystem geführt werden. Ein Wesensmerkmal dieser bekannten Messsysteme besteht darin, dass die Messrolle nach jedem erfolgten Durchlauf eines Messobjektes unter Mitwirkung des genannten pneumatischen Antriebes entweder in eine Rückzugsstellung oder in eine Nullstellung überführt wird. Die für diese beträchtlichen Auslenkbewegungen zur Ver fügung stehenden Zeiten fallen in Abhängigkeit von der Vorschubgeschwindigkeit der Messobjekte und deren Abstände voneinander vergleichsweise kurz aus und müssen demzufolge mit einer entsprechend hohen Geschwindigkeit und schnell ablaufenden Umsteuervorgängen abgewickelt werden. Neben einer hohen Materialbeanspruchung kann dies auch zu einer starken Geräuschentwicklung führen. Diese Umstände begrenzen im Ergebnis die Vorschubgeschwindigkeit der Messobjekte.

Es ist vor diesem Hintergrund die Aufgabe der Erfindung, eine Messeinrichtung der eingangs bezeichneten Art mit der Maßgabe auszugestalten, dass die mechanische Beanspruchung des eigentlichen Messsystems, insbesondere des der Messrolle und der dieser nachgeordneten Funktionselemente vermindert und im Verhältnis zu dem eingangs dargelegten Stand der Technik eine Steigerung der Vorschubgeschwindigkeit der Messobjekte erreichbar ist. Gelöst ist diese Aufgabe bei einer solchen Messeinrichtung durch die Merkmale des Kennzeichnungsteils des Anspruchs 1.

Erfindungswesentlich ist hiernach ein Gleitschuh, der einen sich parallel zu der Bezugsebene erstreckenden Bodenabschnitt aufweist und der gegenüber dem Maschinengestell über Parallelogrammhebe! schwenkbar angeordnet ist. Die Endpunkte der Parallelogrammhebel, die deren Gelenkpunkte bilden, liegen auf den Ecken eines Parallelogramms, so dass die Parallelität zwischen dem Bodenabschnitt und der Bezugsebene auch bei einer Verschwenkung des Gleitschuhs gewahrt bleibt.

Auf dem Gleitschuh, der Bezugsebene gegenüberliegend, ist der Messkopf abgestützt, dessen Messrolle eine Ausnehmung in dem genannten Bodenabschnitt geringfügig durchdringt. Die Messrolle ist in an sich bekannter Weise zum Abrollen auf dem Messobjekt bestimmt.

Der Gleitschuh als solcher ist dazu bestimmt, durch ein anstoßendes Messobjekt ausgelenkt, insbesondere verschwenkt zu werden, wobei die Vertikalkom ponente der Schwenkbewegung zur Verschiebung des Messkopfes benutzt wird.

Infolge der parallellenkerartigen Anlenkung des Gleitschuhes, dessen Parallelogrammhebel sich in einer Ausgangsstellung nahezu senkrecht erstrecken bzw. derart, dass die jeweiligen unteren Anlenkungspunkte in Vorschubrichtung des Messobjektes leicht ausgelenkt sind, führt ein Anstoßen des Messobjektes an dem zugekehrten Bodenbereich des Gleitschuhes dazu, dass dieser eine Bewegung ausführt, die durch aus einem "Mitgehen" in Vorschubrichtung und einer Vertikalbewegung zusammengesetzt ist. Letztgenannte Bewegung ist über eine Sinusfunktion mit der Schwenkbewegung der Parallelogrammhebel, insbesondere deren Schwenkwinkel um ihre oberen Anlenkungspunkte verknüpft, so dass sich eine im Vergleich zum Stand der Technik eine außerordentlich geringe vertikale Anfangsbeschleunigung und damit Beanspruchung der Messrolle bzw. der dieser funktionell nachgeordneten Elemente ergibt.

Entsprechend den durch die Länge der Parallelogrammhebel sowie die geometrische Gestaltung des dem Messobjekt zugekehrten Bodenbereichs des Gleitschuhs bestimmten Verhältnissen, erfährt das Messsystem im Verhältnis zu dem eingangs dargelegten Stand der Technik bei gleicher Vorschubgeschwindigkeit eine wesentlich geringere Beschleunigung, wobei die vollständige Länge des Messobjektes einer Dickenmessung unterzogen wird. Diese Beschleunigungsverhältnisse wiederum ermöglichen vergleichsweise höhere Vorschubgeschwindigkeiten, ohne dass sich das Problem einer übermäßigen Materialbelastung ergibt.

Die Merkmale der Ansprüche 2 und 3 sind auf die Lagerung des Messsystems auf dem Gleitschuh sowie die Verschiebbarkeit desselben gerichtet. Nachdem das Messsystem lediglich vertikal beweglich ist, ist parallel zu der Bezugsebene eine bewegliche Abstützung an dem Gleitschuh erforderlich.

Die Merkmale der Ansprüche 4 und 5 sind auf die weitere Ausgestaltung des Systems der Parallelogrammhebel des Messkopfes und des Gleitschuhs gerichtet. Wesentlich ist, dass der Gleitschuh unter Federkraft in Anlage an den Laufrollen gehalten ist. Aus dieser Federkraft in Verbindung mit der über den Antrieb des Messsystems aufgebrachten Gegenkraft, ergibt sich die, den Andruck der Messrolle auf dem Messobjekt bestimmende Messkraft.

Die Merkmale des Anspruchs 6 sind auf die Ausgestaltung des Bodenbereichs des Gleitschuhs gerichtet. Dieser ist zum unmittelbaren Zusammenwirken unter anderem mit den Kanten bzw. der Oberfläche des zu behandelnden Messobjektes bestimmt und beeinflusst durch seine geometrische Gestaltung in Verbindung mit der Parallelanlenkung des Gleitschuhes an dem Maschinengestell maßgeblich die Bewegungs- und insbesondere Beschleunigungsverhältnisse des Messsystems.

Die Merkmale der Ansprüche 7 und 8 sind auf das Zusammenwirken der Steuerungseinrichtung und des Antriebes des Messsystems gerichtet. Grundsätzlich sollten die Bewegungen des Messsystems so gering wie möglich gehalten werden, welches zunächst einmal darin zum Ausdruck kommt, dass das Messsystem zwischen zwei aufeinander folgenden Messobjekten mittels seines Antriebes, z.B. eines pneumatischen Antriebes, in einer solchen Verschiebeposition gehalten wird, die dem Dickenmesswert des jeweils vorangegangenen Messobjektes entspricht. Ein völliges Zurückziehen unterbleibt somit gleichermaßen wie ein Ausfahren in eine Nullstellung. Die Steuerungseinrichtung ist in Verbindung mit dieser zugeordneten Peripherieelementen dahingehend angelegt, dass der Antrieb des Messsystems in diesem Sinne dann gesteuert wird, wenn die Lücke zwischen zwei Messobjekten größer ist als ein durch die Längserstreckung des Gleitschuhs bestimmtes Maß. Ist umgekehrt die Lücke zwischen zwei Messobjekten kürzer als dieses Maß, entfällt eine dementsprechende Umsteuerung des Antriebs des Messsystems. Durch diese grundsätzliche Istwertspeicherung eines Dickenmesswertes eines vorangegangenen Messobjektes ergibt sich eine wesentlich geringere mechanische Beanspruchung des Messsystems, eine geringere Geräuschentwicklung und ein geringerer Energiebedarf für den Antrieb des Messsystems, d.h. bei einem pneumatischen Antrieb ein geringerer Luftverbrauch.

Auch eine Nullung des Messkopfes ist aufgrund des geringen Verschiebeweges in kürzester Zeit möglich.

Die Merkmale der Ansprüche 9 und 10 sind auf solche Ausführungsformen der erfindungsgemäßen Messeinrichtung gerichtet, bei denen das Messobjekt - in Richtung seiner Längserstreckung gesehen - ober- und unterseitig mit einer Messrolle abgetastet wird, wobei ein Dickenmesswert des Messobjektes aus der Verschiebung beider Messrollen gegenüber einer Bezugsebene abgeleitet wird, so dass allgemein eine Messung der Differenz der Verschiebungen beider Messrollen vorgenommen wird. Vorzugsweise wird davon ausgegangen, dass die untere Messrolle im Vergleich zu der oberen Messrolle nur geringe Verschiebungen gegenüber der Bezugsebene erfährt, so dass die untere Messrolle ohne einen Gleitschuh betrieben wird. Es ist jedoch auch möglich, die untere Messrolle mit einem Gleitschuh zu betreiben, der strukturell dem oberen Gleitschuh entsprechen kann, wobei durch eine dementsprechende Ansteuerung des dem unteren Gleitschuh bzw. dem unteren Messsystem zugeordneten Antriebs sichergestellt sein muss, dass eine Anlage des Gleitschuhs bzw. der Messrolle an der Unterseite des Messobjekts gegeben ist.

Die Merkmale des Anspruchs 11 sind auf die Erhöhung der Betriebssicherheit der Messeinrichtung gerichtet, insbesondere auf den Schutz des Messsystems für den Fall einer Störung in der Energieversorgung des Antriebes.

Die Erfindung wird im Folgenden unter Bezugnahme auf das in den Zeichnungen schematisch wiedergegebene Ausführungsbeispiel näher erläutert werden. Es zeigen:
Fig. 1 eine Seitenansicht einer dem Stand der Technik zuzuordnenden Messeinrichtung in teilweiser Schnittdarstellung;
Fig. 2 eine Seitenansicht der erfindungsgemäßen Messeinrichtung in teilweiser Schnittdarstellung;
Fig. 3 eine Seitendarstellung des im Rahmen der Messeinrichtung eingesetzten Gleitschuhs entsprechend einer Schnittebene III-III der Fig. 3;
Fig. 4 eine Draufsicht auf den genannten Gleitschuh entsprechend dem Pfeil IV der Fig. 3.

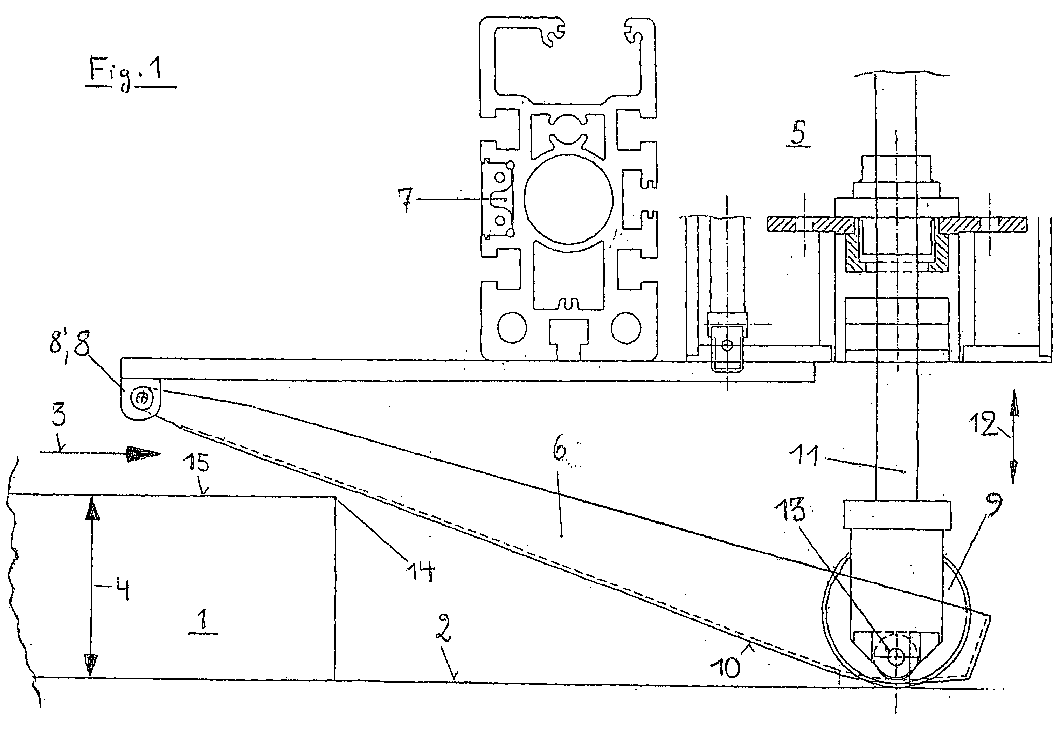

Mit 1 ist In Fig. 1 ein plattenartiges Messobjekt bezeichnet, welches auf einer Bezugsebene 2 aufliegend mit einer definierten Geschwindigkeit in Richtung des Pfeiles 3 bewegt wird. Das Messobjekt 1 weist eine endliche Dicke 4 senkrecht zu der genannten Bezugsebene 2 auf, deren Verlauf - in Längsrichtung des Messobjektes 1 gesehen - während des Durchlaufs durch die Messeinrichtung 5 erfasst werden soll. Die Längserstreckung des Messobjektes 1 verläuft hierbei parallel zu der Bezugsebene 2.

Mit 6 ist eine Einlauframpe bezeichnet, die als langgestreckter, oberseitig offener wannenartiger Grundkörper ausgestattet ist und die an ihrem einen Ende in einem an einem Maschinengestell 7 befestigten Lagerbock 8 um eine sich senkrecht zu der Vorschubrichtung 3 erstreckende Horizontalachse schwenkbar angelenkt ist. Der Lagerbock 8 befindet sich mit Abstand oberhalb der Bezugsebene 2.

Mit 9 ist eine Messrolle bezeichnet, die in der gezeigten Darstellung auf der Bezugsebene 2 aufliegt und hierbei eine zeichnerisch nicht dargestellte Ausnehmung des Bodenbereichs 10 der Einlauframpe 6 durchdringt. Die Messrolle 9 ist an dem Ende eines Messgestänges 11 um eine sich parallel zu der Bezugsebene 2 und senkrecht zu der Vorschubrichtung 3 erstreckende Achse drehbar gelagert, wobei das Gesamtsystem, bestehend aus der Messrolle 9 und dem Messgestänge 11 ein Meßsystem bildet, welches mit einem zeichnerisch ebenfalls nicht dargestellten Messwandler in Wirkverbindung steht. Dessen Funktionsprinzip besteht darin, Vertikalbewegungen der Messrolle 9 gegenüber der Bezugsebene 2, somit in Richtung der Pfeile 12, in ein elektrisches Signal umzusetzen. Dieses Signal wird einer Steuerungseinrichtung übertragen und in geeigneter Weise weiter verarbeitet, insbesondere visuell dargestellt, gespeichert usw. Das genannte Messsystem ist auf der Innenseite des Bodenbereichs 10 mittels frei abrollbarer Laufrollen 13 vertikal abgestützt, deren Lagerung an dem Messgestänge 11 mit der Maßgabe erfolgt, dass die Messrolle 9 um ein definiertes Maß aus der Unterseite der Einlauframpe 6 herausragt.

Zeichnerisch ebenfalls nicht dargestellt Ist ein mit der genannten Steuerungseinrichtung in Verbindung stehender Antrieb, beispielsweise ein pneumatischer Antrieb, mittels welchem das Messsystem in Richtung der Pfeile 12 verschiebbar Ist.

Das Prinzip dieser bekannten Messeinrichtung besteht nunmehr darin, dass infolge des mit einer definierten Geschwindigkeit in Vorschubrichtung 3 bewegten Messobjektes 1, welches mit seiner Kante 14 gegen den Bodenbereich 10 der Einlauframpe 6 stößt, letztere um die Achse des Lagerbockes 8 verschwenkt wird, wobei diese Schwenkbewegung über die genannten Laufrollen 13 eine Vertikalbewegung des Messgestänges 11 auslöst. Diese Schwenkbewegung führt schließlich zu einem Abrollen der Messrolle 9 auf der Oberseite 15 das Messobjektes, wobei entsprechend der vertikalen Auslenkung des Messsystems über den Messwandler ein entsprechender Messwert generiert wird. Ziel ist es in jedem Fall, den Verlauf der Dicke 4 des Messobjektes in Richtung dessen Längserstreckung zu erfassen.

In Abhängigkeit von der Dicke 4 des Messobjektes 1 sowie den Abständen zwischen dem Anlenkungspunkt 8' der Einlauframpe 6 einerseits und dem primären Anstoßpunkt des Messobjektes 1 an dem genannten Bodenbereich 10 bzw. den Laufrollen 13 andererseits kommt es jedoch zu einer beträchtlichen vertikalen Beschleunigung des Messsystems. Insbesondere führt das Verhältnis des Abstands der Laufrollen von dem Anlenkungspunkt zu dem Abstand des genannten Anstoßpunktes von dem Anlenkungspunkt zu einer entsprechenden Verstärkung der Auslenkbewegung der Einlauframpe 6 an der Stelle, an der diese mit den Laufrollen 13 und damit dem Messsystem in Wechselwirkung steht.

Diese kinematischen Randbedingungen machen es zur Vermeidung von Schwingungsproblemen, jedoch auch zum mechanischen Schutz des Messsystems erforderlich, über den diesem zugeordneten Antrieb in Abstimmung mit der Auslenkbewegung der Einlauframpe 6 eine Gegenkraft zu entwickeln. Insgesamt zwingen diese Gegebenheiten insbesondere bei Messobjekten mit vergleichsweise großen Dickenabmessungen jedoch zu einer beträchtlichen Beschränkung der Vorschubgeschwindigkeit des Messobjektes 1.

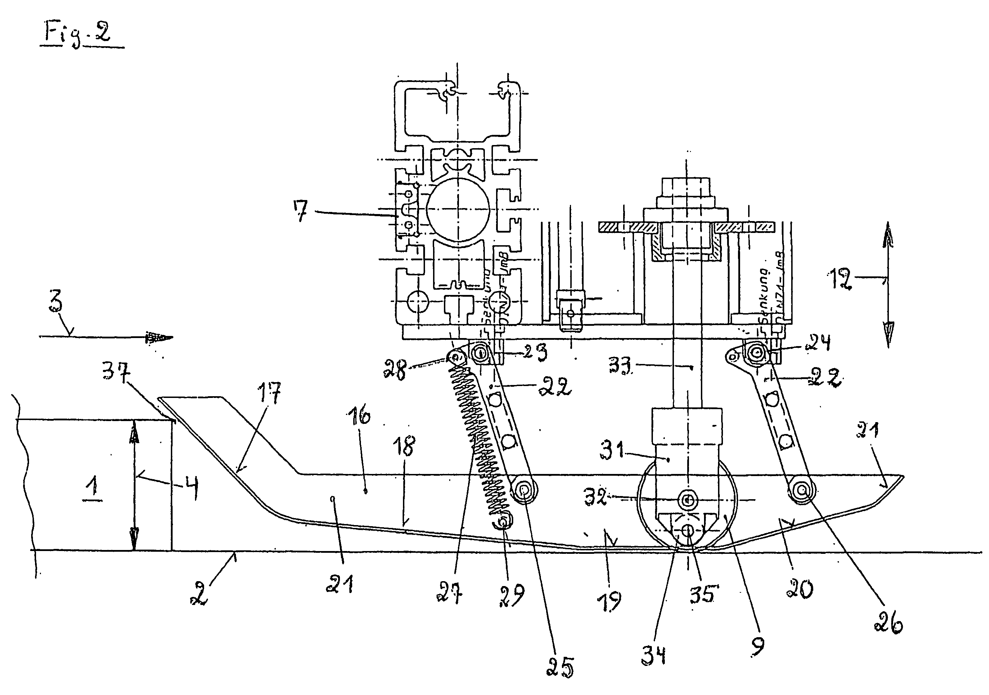

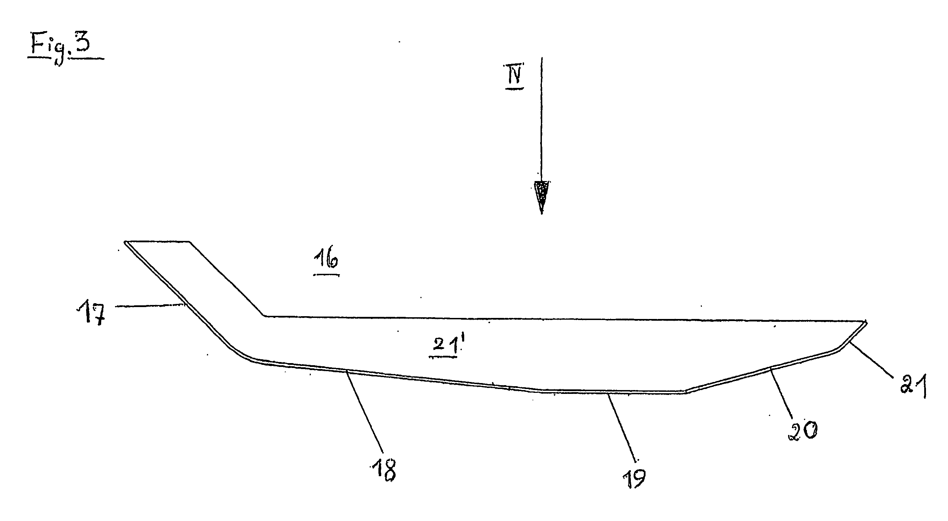

In der in den Figuren 2 bis 4 beispielhaft wiedergegebenen erfindungsgemäßen, im Folgenden näher erläuterten Verkörperung einer Messeinrichtung sind Funktionselemente, die mit denjenigen der Fig. 1 übereinstimmen, entsprechend beziffert.

Mit 16 ist ein Gleitschuh bezeichnet, der in einer im Folgenden noch zu erläutemden Weise schwingfähig an einem Maschinengestell 7 gelagert ist und der einen Bodenabschnitt aufweist, der zum Zusammenwirken mit dem Messobjekt 1 bestimmt und angeordnet ist. Der Bodenabschnitt besteht - von links nach rechts gesehen - aus der Hintereinanderanordnung eines ersten vergleichsweise steilen, sich beispielsweise unter einem Winkel von 45° zu der Bezugsebene 2 erstreckenden Rampenabschnitt 17, einem sich an diesen anschließenden, sich unter einem wesentlich flacheren Winkel zu der Bezugsebene 2 erstreckenden Rampenabschnitt 18, einem sich parallel zu der Bezugsebene erstreckenden anschließenden Bodenabschnitt 19, einem sich an letztgenannten anschließenden, gegenüber der Bezugsebene 2 wiederum unter einem vergleichsweise flachen Winkel ansteigenden Rampenabschnitt 20 und einem sich anschließenden, unter einem vergleichsweise steileren Winkel zu der Bezugsebene 2 erstreckenden Rampenabschnitt 21. An die genannten Rampenabschnitte 17 bis 20 schließt sich eine Seitenwandung 21' an, so dass der Gleitschuh 16 global eine zur Oberseite hin offene wannenartige Gestalt erhält.

Mit 22 sind zwei untereinander gleich beschaffene und insbesondere gleich lange Parallelogrammhebel bezeichnet, die an den horizontal voneinander beabstandeten Punkten 23, 24 des Maschinengestells 7 schwenkbar angelenkt sind. Die Punkte 23, 24 können jeweils durch Bolzen gebildet werden, die sich in einer gemeinsamen Horizontalebene befinden.

Die Parallelogrammhebel 22 sind - senkrecht zur Zeichenebene der Fig. 2 - jeweils paarweise mit Abstand zueinander angeordnet, wobei deren jeweils untere, d.h. den Punkten 23, 24 abgekehrte Enden in Punkten 25, 26 der Seitenwandungen 21' des Gleitschuhs 16 schwenkbar angelenkt sind, welche Punkte 25, 26 sich wiederum in einer gemeinsamen Horizontalebene befinden. In der in Fig. 1 gezeigten Ausgangsstellung des Gleitschuhs 16 erstrecken sich die beiden Parallelogrammhebel 22 unter einem spitzen Winkel zu durch die Punkte 23, 24 verlaufenden Vertikalebenen, und zwar dahingehend, dass die unteren Punkte 25, 26 in Richtung des Pfeiles 3 gegenüber den oberen Punkten 23, 24 versetzt sind. Man erkennt aus diesen Ausführungen, dass die Anordnung der Parallelogrammhebel eine Parallellenkeranordnung für den Gleitschuh 16 bildet. Wesentlich ist, dass die Punkte 23, 24 einerseits sowie die Punkte 25, 26 andererseits, bezogen auf die Zeichenebene der Fig. 1, jeweils auf zueinander parallelen Geraden liegen, die ferner parallel zu dem Bodenabschnitt 19 verlaufen.

Mit 27 ist eine Zugfeder bezeichnet, deren eines Ende an einem Punkt 28, der sich mit geringfügigem Abstand von dem Punkt 23 an dem diesem zugekehrten Ende des Parallelogrammhebels 22 befindet und dessen anderes Ende an einem Punkt 29 an der Seitenwandung 21' des Gleitschuhs 16 angelenkt ist, der von dem dortigen Punkt 25 beabstandet ist. Jedem der beiden senkrecht zur Zeichenebene der Fig. 1 einander benachbarten Parallelogrammhebel 22 ist eine solche Zugfeder 27 zugeordnet. Man erkennt, dass unter dem Einfluss der Zugfedern 27 der Gleitschuh 16 unter Federvorspannung gegen das im Folgenden zu beschreibende Messsystem gezogen wird.

Mit 9 ist eine Messrolle bezeichnet, die in der gezeigten Darstellung der Fig. 2 auf der Bezugsebene 2 aufliegt und hierbei eine Ausnehmung 30 in dem Bodenabschnitt 19 des Gleitschuhs 16 durchdringt. Die Messrolle 9 ist an einem Rollenhalter 31 um eine sich parallel zu der Bezugsebene 2 erstreckende Achse 32 drehbar gelagert. Der Rollenhalter 31 steht mit einem vertikal gelagerten Messgestänge 33 in Verbindung, welches mit einem zeichnerisch nicht dargestellten Messwandler in Wirkverbindung steht. Dessen Prinzip basiert darauf, dass Vertikalbewegungen der Messrolle 9 gegenüber der Bezugsebene 2, somit in Richtung der Pfeile 12 in ein elektrisches Signal, vorzugsweise ein digitales Signal, umgesetzt werden. Dieses Signal wird einer Steuerungseinrichtung übermittelt und in dieser in geeigneter Weise visuell dargestellt, gespeichert usw.

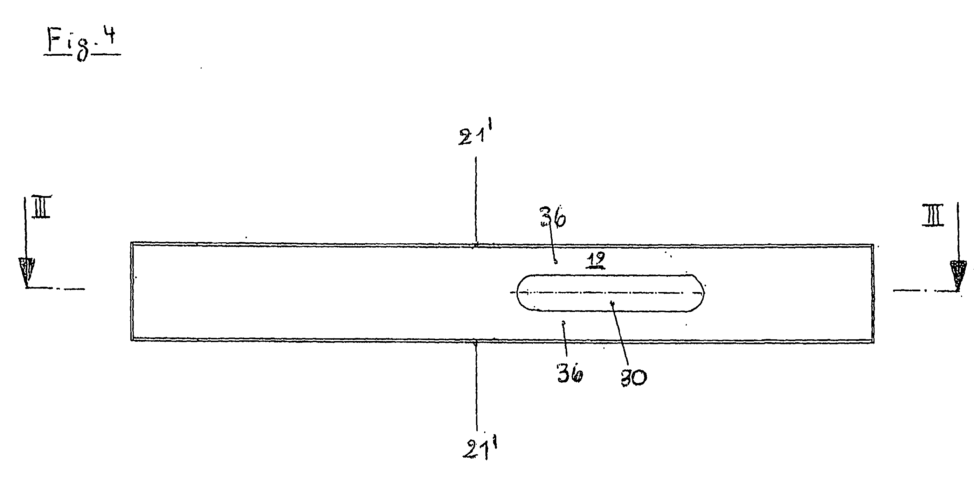

Wie aus Fig. 4 erkennbar ist, befindet sich die Messrolle 9 entsprechend der Positionierung der Ausnehmung 30 in einem zentralen Bereich des Bodenabschnitts 19, wobei beiderseits des Rollenhalters 31 Laufrollen 34 jeweils um Achsen 35 parallel zu der Achse 32 jedoch unterhalb dieser drehbar gelagert sind. Beide Achsen 32, 35 erstrecken sich horizontal und senkrecht zu dem Pfeil 3, wobei die beiden Laufrollen 34 seitlich bezüglich der Messrolle 9 angeordnet und somit in den Bereichen 36 beiderseits der Ausnehmung 30 auf dem Bodenabschnitt 19 des Gleitschuhs 16 rollbar aufgelagert wird. Die Positionen der Achsen 32, 35 in Verbindung mit den Durchmessern der Messrolle 9 einerseits sowie der Laufrollen 34 andererseits sind mit der Maßgabe angelegt, dass - wie aus der Zeichnungsfigur 2 ersichtlich - die Messrolle 29 geringfügig aus der Unterseite des Gleitschuhes 16 hinausragt.

Das Messgestänge 33 steht darüber hinaus mit einem zeichnerisch nicht wiedergegebenen Antrieb, z.B. einer pneumatisch betätigten Kolben-Zylinder-Einheit in Wirkverbindung, durch welche die Laufrollen 34 in Anlage an dem Gleitschuh 16 in den Bereichen 36 gehalten werden und in Verbindung mit den Zugfedern 27 die erforderliche Messkraft aufgebracht wird.

Man erkennt aus obigen Ausführungen, dass das Funktionsprinzip der erfindungsgemäßen Messeinrichtung darauf basiert, dass der Gleitschuh 16 infolge seiner Anlenkung an den Punkten 23, 24 verschwenkbar ist, wobei lediglich die Vertikalkomponente der Gesamtbewegung des Gleitschuhes 16 über die Laufrollen 34 auf das Messgestänge 33 übertragen wird. Das in Richtung des Pfeiles 3 parallel zu der Bezugsebene 2 bewegte Messobjekt 1 stößt mit seiner Ecke 37 an den steil verlaufenden Rampenabschnitt 17 des Gleitschuhes 16 an, womit der Auslenkvorgang des Gleitschuhes 16 um die Punkte 23, 24 beginnt. Der weitere Ablauf der Auslenkbewegung des Gleitschuhes 16 ist kinematisch durch die aufeinanderfolgenden Rampenabschnitte 17, 18, insbesondere deren absolute Längen sowie Winkel gegenüber der Bezugsebene 2 bestimmt. Nachdem lediglich die Vertikalkomponente der Schwenkbewegung des Gleitschuhs 16 über die Messrolle 9 übertragen wird, ergibt sich eine im Vergleich zu dem eingangs dargelegten Stand der Technik wesentlich geringere Vertikalbeschleunigung der Messrolle 9 einschließlich dieser in Richtung der Pfeile 12 nachgeordneter Funktionselemente. Entsprechend den Winkeln der aufeinanderfolgenden Rampenabschnitten 17, 18 sowie des Bodenabschnitts 19 ist die Verschwenkbewegung des Gleitschuhes 16 durch eine zunächst rasche Beschleunigung gekennzeichnet, die im Bereich des Rampenabschnitts 18 durch eine sehr viel geringere Beschleunigung, insbesondere auch in vertikaler Richtung gekennzeichnet ist.

Ausgehend von einer "Nullung" des Messsystems, bei welchem die Messrolle 9 das Niveau der Bezugsebene 2 erfasst, findet durch das sich in Richtung des Pfeiles 3 bewegende Messobjekt 1 eine Auslenkung des Gleitschuhes 16 und damit der Messrolle 9 auf den Istwert der Dicke 4 des Messobjektes 1 statt, wobei in der Folge der Verlauf dieses Dickenwertes in Längsrichtung des Messobjekts 1 abgetastet und protokolliert wird. Während dieses Messvorgangs - in Längsrichtung des Messobjekts 1 gesehen - steht die Messrolle 9 in Berührung mit der ihr zugekehrten Seite des Messobjektes 1. Dieser Auslenkungszustand der Messrolle 9 wird nach Erreichen des Endes des Messobjektes 1 als Sollwert für den Wert der Dicke 4 des nächstfolgenden Messobjektes gespeichert. Über den dem Messgestänge zugeordneten Antrieb werden die Laufrollen 34 in stetiger Anlage an dem Bodenabschnitt 19 gehalten.

Für den Fall, dass der Abstand zwischen zwei aufeinander folgenden Messobjekten 1 - in Richtung des Pfeiles 3 gesehen - kleiner ist als ein durch die Längserstreckung des Gleitschuhes 16 bestimmtes Maß, so dass infolge des Anliegens des Gleitschuhes 16 an den aufeinander folgenden Messobjekten 1 der Gleitschuh 16 jedenfalls nicht bis auf das Niveau der Bezugsebene 2 schwenken kann, kann dieser Abstand ohne Umsteuerung des Antriebes des Messgestänges 33 überbrückt werden.

Fällt die genannte Lücke hingegen größer als das durch die Längserstreckung des Gleitschuhes 16 bestimmte Maß aus, wird durch eine Umsteuerung des Antriebes des Messgestänges 33 sichergestellt, dass dieses in der zuletzt ausgefahrenen Position verharrt und jedenfalls nicht bis auf das Niveau der Bezugsebene 2 heruntergefahren wird. Faktisch wird der Messwert der Dicke eines Messobjektes 1 als Sollwert für das nächstfolgende Messobjekt 1 gespeichert. Vorausgesetzt wird für diese Betriebsweise, dass die Geschwindigkeit und die Position der Messobjekte 1 durch geeignete Sensoren exakt feststellbar sind und dass den Bewegungszustand sowie die Position der Messobjekte beschreibende Signale in der übergeordneten Steuerung zur Verfügung stehen, über welche auch der Antrieb des Messkopfes gesteuert wird. In jedem Fall wird eine Aufzeichnung eines Messwertes zwischen zwei Messobjekten unterdrückt.

Infolge der durch die Gestalt der Gleitschuhe 16 bedingten, im Vergleich zum Stand der Technik beschleunigungsärmeren Bewegung des Messgestänges jedoch auch infolge der durch die Gleitschuhe gegebenen Möglichkeit der Überbrückung zweier aufeinander folgender Messobjekte bzw. der Istwertspeicherung der Dicke des jeweils vorangegangenen Messobjektes ist neben einem verschleißärmeren Betrieb der Messeinrichtung, einem verminderten Energiebedarf bzw. Druckluftverbrauch auch der Vorteil einer wesentlich geringeren Geräuschentwicklung gegeben.

Eine erfindungsgemäße Messeinrichtung wurde in obiger Darstellung in einer solchen Ausprägung beschrieben, bei der sich auf der einen Seite einer Bezugsebene 2 ein mit einem Gleitschuh 16 zusammenwirkendes Messsystem befindet. Dieses Funktionsprinzip ist beispielsweise dahingehend erweiterbar, sich unterhalb des zu vermessenden Messobjektes eine Messrolle befindet, die in gleicher Weise wie die sich oberhalb des Messobjektes befindliche Messrolle einen Teil eines Messsystems bildet. Eine Dickenmessung beruht in diesem Fall auf einer Auswertung der Auslenkung beider Messrollen, somit einer Differenzwertbildung.

## Patentansprüche

1. Messeinrichtung zur kontinuierlichen Erfassung der Dicke (4) langgestreckter plattenartiger Messobjekte (1), mit zumindest einem, in einem Maschinengestell (7) aufgenommenen, mit einer Messrolle (9) versehenen, in Richtung auf eine Bezugsebene (2) hin bzw. von dieser fortbewegbaren Messsystem, das über die Messrolle (9) in Anlage an der Bezugsebene (2) bzw. einer Messfläche des in Richtung (3) seiner Längserstreckung bewegten Messobjektes (1) bringbar ist, so dass aus dem Abstand der Messfläche von der Bezugsebene (2) ein die Dicke (4) des Messobjektes (1) darstellender Messwert ableitbar ist, mit einem Messwandler, der mit dem Messsystem in Wirkverbindung steht und zur Generierung eines den Verschiebeweg der Messrolle (9) darstellenden elektrischen Signales bestimmt und eingerichtet ist, mit einem Antrieb für das Messsystem und einer Steuerungseinrichtung, die zumindest mit dem Antrieb sowie mit dem Messwandler in Wirkverbindung steht, **gekennzeichnet durch** wenigstens einen Gleitschuh (16), der an zwei voneinander beabstandeten, nach Art von Parallellenkern angeordneten Schwingen bzw. Paraltelogrammhebeln (22) an dem Maschinengestell (7) schwenkbar angeordnet ist und der zumindest einen, sich parallel zu der Bezugsebene (2) erstreckenden Bodenabschnitt (19) aufweist, der mit einer die Messrolle (9) aufnehmenden Ausnehmung (30) versehen ist und auf das Messsystem gegenüber der Bezugsebene (2) abgestützt ist.

2. Messeinrichtung nach Anspruch 1, **dadurch gekennzeichnet, dass** die Messrolle (9) in an sich bekannter Weise über Laufrollen (34) beiderseits der Ausnehmung (30) auf dem Bodenabschnitt (19) des Gleitschuhs (16) gestützt ist, wobei die Messrolle (9) um ein definiertes Maß unterseitig aus dem Gleitschuh (16) herausragt.

3. Messeinrichtung nach Anspruch 1 oder 2, **dadurch gekennzeichnet, dass** eine Bewegbarkeit des Messsystems in Richtungen (12) senkrecht zu der Bezugsebene (2) gegeben ist.

4. Messeinrichtung nach einem der vorangegangenen Ansprüche 1 bis 3, **dadurch gekennzeichnet, dass** die Parallelogrammhebel (22) im nicht ausgelenkten Zustand des Gleitschuhes (16) gegenüber einer zu der Bezugsebene (2) vertikalen Ebene in der genannten Richtung (3) geringfügig ausgelenkt sind.

5. Messeinrichtung nach einem der vorangegangenen Ansprüche 1 bis 4, **dadurch gekennzeichnet, dass** der Gleitschuh (16) unter Federkraft in Anlage an dem Messsystem gehalten ist.

6. Messeinrichtung nach einem der vorangegangenen Ansprüche 1 bis 5, **dadurch gekennzeichnet, dass** der Bodenbereich des Gleitschuhes (16) - in der Richtung (3) gesehen - aus der Hintereinanderanordnung eines vergleichsweise steilen Rampenabschnitts (17), eines vergleichsweise flachen Rampenabschnitts (18), dem Bodenabschnitt (19), eines vergleichsweise flachen Rampenabschnitts (20) und eines vergleichsweise steilen Rampenabschnitts (21) besteht, wobei die beiden erstgenannten Rampenabschnitte (17,18) in der Richtung (3) geneigt und die beiden letztgenannten Rampenabschnitte (20,21) in dieser Richtung (3) ansteigend verlaufen.

7. Messeinrichtung nach einem der vorangegangenen Ansprüche 1 bis 6, **dadurch gekennzeichnet, dass** die Steuerungseinrichtung mit der Maßgabe eingerichtet ist, dass für den Fall des Überschreitens des Abstandes zweier aufeinander folgender Messobjekte (1) eines durch die Längserstreckung des Gleitschuhes (16) bestimmten Maßes über eine Umsteuerung des Antriebes des Messsystems der Gleitschuh (16) in einer zumindest im Wesentlichen der Dicke (4) des jeweils vorangegangenen Werkstücks (1) entsprechenden Höhenposition gehalten ist.

8. Messeinrichtung nach einem der vorangegangenen Ansprüche 1 bis 7, **dadurch gekennzeichnet, dass** die Steuerungseinrichtung mit der Maßgabe eingerichtet ist, dass für den Fall des Unterschreitens des Abstandes zweier aufeinander folgender Messobjekte (1) eines durch die Längserstreckung des Gleitschuhes (16) bestimmten Maßes der Messvorgang ohne Umsteuerung des Antriebes des Messsystems fortsetzbar ist, und zwar unter Unterdrückung der Messwertaufzeichnung in dem Bereich zwischen zwei aufeinander folgenden Messobjekten (1).

9. Messeinrichtung nach einem der vorangegangenen Ansprüche 1 bis 8, **gekennzeichnet durch** einen oberhalb des Messobjektes (1) angeordneten und angelenkten Gleitschuh (16), der über die zur Abtastung der Oberseite (15) des Messobjektes bestimmte Messrolle (9) mit dem einen Messsystem in Verbindung steht und **durch** eine weitere, zur Abtastung der Unterseite des Messobjektes (1) bestimmte Messrolle, die mit einem weiteren Messsystem in Verbindung steht, wobei aus der Verschiebeposition beider Messrollen gegenüber der Bezugsebene (2) ein Messwert für die Dicke (4) des Messobjektes (1) ableitbar ist.

10. Messeinrichtung nach einem der vorangegangenen Ansprüche 1 bis 8, **gekennzeichnet durch** einen oberhalb des Messobjektes (1) angeordneten und angelenkten ersten Gleitschuh (16), der über die zur Abtastung der Oberseite (15) des Messobjektes (1 ) bestimmte Messrolle (9) mit dem einen Messsystem in Verbindung steht und **durch** einen zweiten, unterhalb des Messobjektes (1 ) angeordneten und angelenkten Gleitschuh, der über eine weitere, zur Abtastung der Unterseite des Messobjektes (1 ) bestimmte Messrolle mit einem weiteren Messsystem In Verbindung steht, wobei aus der Verschiebeposition beider Messrollen gegenüber der Bezugsebene (2) ein Messwert für die Dicke (4) des Messobjektes (1 ) ableitbar ist.

11. Messeinrichtung nach einem der Ansprüche 1 bis 10, **dadurch gekennzeichnet, dass** die Steuerungseinrichtung mit dem Antrieb des Messsystems/mit den Antrieben der Messsysteme in Verbindung steht und dass die Steuerungseinrichtung dahingehend eingerichtet ist, dass bei Ausfall der Energieversorgung des Antriebs/der Antriebe das Messsystem in seiner letzen Position verbleibt/die Meßsysteme in ihren letzten Positionen verbleiben bzw. In eine Rückzugsposition überführt wird/werden.

## Claims

1. Measuring device for continuously recording the thickness (4) of elongate, panel-type measurement objects (1), having at least one measuring system which is accommodated in a machine frame (7), is provided with a measuring roller (9), can be moved in the direction towards and away from a reference plane (2) and which can be moved by way of the measuring roller (9) into position against the reference plane (2) or a measuring surface of the measurement object (1) which is moved in the direction (3) of its longitudinal extension, so that from the distance of the measuring surface from the reference plane (2) it is possible to derive a measured value which represents the thickness (4) of the measurement object (1), having a measuring transducer which is operatively connected to the measuring system and is intended and arranged to generate an electrical signal representing the displacement path of the measuring roller (9), having a drive for the measuring system and a control device which is operatively connected at least to the drive and to the measuring transducer, **characterised by** at least one guide shoe (16) which is disposed in a pivotable manner on two mutually spaced apart oscillating cranks or parallelogram-shaped levers (22), which are arranged in the manner of parallel steering elements, on the machine frame (7) and which guide shoe comprises at least one base section (19) which extends in parallel with the reference plane (2) and which is provided with a recess (30) accommodating the measuring roller (9) and the said base section is supported on the measuring system with respect to the reference plane (2).

2. Measuring device as claimed in claim 1, **characterised in that** the measuring roller (9) is supported in a manner known *per se* by way of running rollers (34) on both sides of the recess (30) on the base section (19) of the guide shoe (16), wherein the measuring roller (9) protrudes on the underside out of the guide shoe (16) by a defined distance.

3. Measuring device as claimed in claim 1 or 2, **characterised in that** the measuring system is able to move in directions (12) perpendicular to the reference plane (2).

4. Measuring device as claimed in any one of the preceding claims 1 to 3, **characterised in that** in the non-deflected state of the guide shoe (16), the parallelogram-shaped levers (22) are deflected slightly in the said direction (3) with respect to a plane which is vertical to the reference plane (2).

5. Measuring device as claimed in any one of the preceding claims 1 to 4, **characterised in that** the guide shoe (16) is held under resilient force in position against the measuring system.

6. Measuring device as claimed in any one of the preceding claims 1 to 5, **characterised in that** the base region of the guide shoe (16) - as seen in the direction (3) - consists of the series arrangement of a comparatively steep ramp section (17), a comparatively flat ramp section (18), the base section (19), a comparatively flat ramp section (20) and a comparatively steep ramp section (21), wherein the two first-named ramp sections (17, 18) are inclined in the direction (3) and the two last-named ramp sections (20, 21) extend in an ascending manner in this direction (3).

7. Measuring device as claimed in any one of the preceding claims 1 to 6, **characterised in that** the control device is arranged with the proviso that when the distance between two consecutive measurement objects (1) exceeds a distance determined by the longitudinal extension of the guide shoe (16), a reverse-control of the drive of the measuring system serves to hold the guide shoe (16) at a height position corresponding at least substantially to the thickness (4) of the respectively preceding workpiece (1).

8. Measuring device as claimed in any one of the preceding claims 1 to 7, **characterised in that** the control device is arranged with the proviso that when the distance between two consecutive measurement objects (1) is less than a distance determined by the longitudinal extension of the guide shoe (16), the measuring procedure can be continued without reversing the control of the drive of the measuring system, and thus suppressing the recording of measured values in the region between two consecutive measurement objects (1).

9. Measuring device as claimed in any one of the preceding claims 1 to 8, **characterised by** a guide shoe (16) which is disposed and articulated above the measurement object (1) and which is connected to the one measuring system by way of the measuring roller (9), which is intended to scan the upperside (15) of the measurement object, and by a further measuring roller which is intended to scan the underside of the measurement object (1) and is connected to a further measuring system, wherein from the displacement position of the two measuring rollers with respect to the reference plane (2) it is possible to derive a measured value for the thickness (4) of the measurement object (1).

10. Measuring device as claimed in any one of the preceding claims 1 to 8, **characterised by** a first guide shoe (16) which is disposed and articulated above the measurement object (1) and which is connected to the one measuring system by way of the measuring roller (9) which is intended to scan the upperside (15) of the measuring object (1), and by a second guide shoe which is disposed and articulated below the measurement object (1) and which is connected to a further measuring system by way of a further measuring roller which is intended to scan the underside of the measurement object (1), wherein from the displacement position of the two measuring rollers with respect to the reference plane (2) it is possible to derive a measured value for the thickness (4) of the measurement object (1).

11. Measuring device as claimed in any one of claims 1 to 10, **characterised in that** the control device is connected to the drive(s) of the measuring system(s) and that the control device is arranged in such a manner that in the event of an interruption in the power supply to the drive(s), the measuring system(s) remains/remain in its/their last position(s) or is/are moved to a withdrawn position.

## Revendications

1. Dispositif de mesure permettant de mesurer en continu l'épaisseur (4) de pièces (1) plates allongées, avec au moins un système de mesure reçu dans un bâti de machine (7), pourvu d'un rouleau de mesure (9) et mobile en va-et-vient par rapport à un plan de référence (2), qui peut être appuyé par l'intermédiaire du rouleau de mesure (9) sur le plan de référence (2) ou sur une surface de mesure de la pièce (1) déplacée dans le sens (3) de son axe longitudinal, de sorte qu'une valeur de mesure représentant l'épaisseur (4) de la pièce (1) puisse être dérivée de la distance entre la surface de mesure et le plan de référence (2), avec un convertisseur de mesure communiquant avec le système de mesure, destiné à et conçu pour produire un signal électrique représentant le trajet de décalage du rouleau de mesure (9), avec un mécanisme d'entraînement pour le système de mesure et une installation de commande en liaison active au moins avec le mécanisme d'entraînement ainsi qu'avec le convertisseur de mesure, **caractérisé en ce qu'**il comporte au moins un patin coulissant (16) disposé de manière pivotante sur deux bascules ou leviers de parallélogramme (22) distants l'un de l'autre et disposés comme des guides à parallélogramme sur le bâti de machine (7) et qui présente au moins une partie de fond (19) parallèle au plan de référence (2) et pourvue d'un évidement (30) recevant le rouleau de mesure (9) et qui s'appuie sur le système de mesure face au plan de référence (2).

2. Dispositif de mesure selon la revendication 1, **caractérisée en ce que** le rouleau de mesure (9) est soutenu de manière connue par deux galets de roulement (34) de part et d'autre de l'évidement (30) sur la partie de fond (19) du patin coulissant (16), le rouleau de mesure (9) dépassant d'une grandeur définie du patin coulissant (16) sur la face inférieure.

3. Dispositif de mesure selon la revendication 1 ou 2, **caractérisé en ce que** le système de mesure est mobile dans des directions (12) perpendiculaires au plan de référence (2).

4. Dispositif de mesure selon l'une des revendications 1 à 3, **caractérisé en ce que** le levier à parallélogramme (22) est légèrement dévié dans la direction (3) mentionnée lorsque le patin coulissant (16) n'est pas dévié, par rapport à un plan vertical par rapport au plan de référence (2).

5. Dispositif de mesure selon l'une des revendications 1 à 4, **caractérisé en ce que** le patin coulissant (16) est retenu en appui sur le système de mesure par l'action d'un ressort.

6. Dispositif de mesure selon l'une des revendications 1 à 5, **caractérisé en ce que** la partie de fond du patin coulissant(16), vue dans la direction (3), se compose de la succession d'une partie inclinée à pente relativement forte (17), d'une partie inclinée à pente relativement faible (18), de la partie de fond (19), d'une partie inclinée à pente relativement faible (20) et d'une partie inclinée à pente relativement fort (21), les deux premières parties inclinées (17, 18) étant descendantes dans la direction (3) et les deux dernières parties inclinées (20, 21) étant ascendantes dans cette direction (3).

7. Dispositif de mesure selon l'une des revendications 1 à 6, **caractérisé en ce que** l'installation de commande est conçue de telle sorte que si la distance entre deux pièces (1) consécutives dépasse une valeur définie par l'étendue longitudinale du patin coulissant (16), le patin coulissant (16) est maintenu dans une position en hauteur correspondant sensiblement à l'épaisseur (4) de la pièce (1) précédente par un changement de commande de l'entraînement du système de mesure.

8. Dispositif de mesure selon l'une des revendications 1 à 7, **caractérisé en ce que** l'installation de commande est conçue de telle sorte que si la distance entre deux pièces (1) successives devient inférieure à une valeur définie par l'étendue longitudinale du patin coulissant (16), l'opération de mesure est poursuivie sans modification du fonctionnement de l'entraînement du système de mesure, en empêchant l'enregistrement de la valeur de mesure dans la zone comprise entre deux pièces (1) successives.

9. Dispositif de mesure selon l'une des revendications 1 à 8, **caractérisé en ce qu'**il comporte un patin coulissant (16) disposé au-dessus de la pièce (1), qui est relié à un système de mesure par un rouleau de mesure (9) destiné à palper la face supérieure (15) de la pièce, et relié à un autre système de mesure par un autre rouleau de mesure destiné à palper la face inférieure de la pièce (1), l'épaisseur (4) de la pièce (1) pouvant être dérivée de la position de décalage des deux rouleaux de mesure par rapport au plan de référence (2).

10. Dispositif de mesure selon l'une des revendications 1 à 8, **caractérisé en ce qu'**il comporte un premier patin coulissant (16) disposé au-dessus de la pièce (1), qui est relié à un système de mesure par un rouleau de mesure (9) destiné à palper la face supérieure (15) de la pièce (1), ainsi qu'un deuxième patin coulissant disposé sous la pièce (1), qui est relié à un deuxième système de mesure par un autre rouleau de mesure destiné à palper la face inférieure de la pièce (1), l'épaisseur (4) de la pièce (1) pouvant être dérivée de la position de décalage des deux rouleaux de mesure par rapport au plan de référence (2).

11. Dispositif de mesure selon l'une des revendications 1 à 10, **caractérisé en ce que** l'installation de commande est reliée au mécanisme d'entraînement du système de mesure ou aux mécanismes d'entraînement des systèmes de mesure et **en ce que** l'installation de commande est conçue de telle sorte qu'en cas de défaillance de l'alimentation en énergie du ou des mécanismes d'entraînement, le ou les systèmes de mesure restent dans leur dernière position ou sont ramenés dans une position de repli.
